# EUROPEAN PATENT SPECIFICATION

(11) **EP 2 610 223 B1**
(45) Date of publication and mention of the grant of the patent: **27.09.2017**
(21) Application number: 11195754.4
(22) Date of filing: 27.12.2011
(51) Int. Cl.: C03B 7/084, C03B 7/00

(54) **Method and device for controlling the amount of molten glass to be dispensed**
Verfahren und Vorrichtung für die Kontrolle der Grösse von Glasposten
Procédé et dispositif de contrôle de la quantité de paraisons de verre

(43) Date of publication of application: 03.07.2013
(73) Proprietor: BDF Industries S.p.A., 36100 Vicenza (IT)
(72) Inventor: Beraudo, Mario, 36100 Vicenza VI (IT); Sasso, Daniele, I-36100 Vicenza (IT)
(74) Representative: Frontoni, Stefano

(56) References cited:
- WO-A1-2007/085890
- JP-A- 59 146 945
- US-A- 2 539 145
- US-A- 4 682 998
- US-A- 4 708 729
- US-A1- 2006 213 226

## Description

The present invention relates to a device for dispensing molten glass. In particular, the present invention regards a device of the type comprising:
- a tank provided for containing molten glass;
- one or more delivery openings through which the glass contained in said tank is delivered;
- at least one tubular element set inside said tank and configured for collecting, above said one or more openings, molten glass at a given level; and
- at least one plunger element, which is set inside said tubular element and can be moved for causing outlet of molten glass in discrete amounts through said one or more openings.

A device of the type referred to above is normally used in glassworks for supplying machines for forming hollow glass articles. In particular, a device of this sort is generally inserted inside a glass-melting plant, the tank of the device being supplied by one or more channels of said plant. The device dispenses drops of molten glass that supply the forming sections of the forming machine downstream of the device. In order to form the drops of glass, the device generally envisages a cutting mechanism set underneath the glass-delivery openings, which is designed to cut the bead of molten glass coming out of said openings so as to form the drops.

The object of the present invention is to provide an innovative method for controlling the amount of molten glass delivered at each cycle. The method of the present invention forms the subject of Claims 1 to 3. The present invention also regards a device according to Claim 4, as well as a computer program product according to Claim 5, which can be loaded into the memory of at least one computer and comprises portions of software code that are able to implement the steps of the method when the product is run on at least one computer. As used herein, reference to such a computer program product is understood as being equivalent to the reference to a computer-readable means containing instructions for control of the processing system for co-ordinating implementation of the method according to the invention. The reference to "at least one computer" is evidently meant to highlight the possibility of the present invention being implemented in a modular and/or distributed form.

It is to be noted that the control methods so far used simply envisage measurement of the amount of glass dispensed (specifically, the weight of the drop formed), and, in the case where the amount measured departs from a reference value, adjusting the operating parameters of the device so as to bring the amount dispensed to a value corresponding to the reference value. A method according to the preamble of claim 1 is known from US-A-4 682 998.

As will be seen in what follows, the device described herein performs, instead, a control that determines, in a predictive way, the possible deviations of the amount of glass that is to be dispensed from the aforesaid reference value, without the need to measure said amount directly, thus anticipating the necessary interventions of regulation. Said control guarantees a regulation of the amount of glass dispensed that is much more efficient and precise.

Preferred characteristics of the invention are illustrated in the dependent claims.

The claims form an integral part of the technical teaching provided herein in relation to the invention.

Further characteristics and advantages of the invention will emerge from the ensuing description with reference to the annexed drawings, which are provided purely by way of non-limiting example and in which:
- Figure 1 illustrates a front view of the device described herein; and
- Figure 2 is a schematic view, in longitudinal section, of the device of Figure 1.

In the ensuing description, various specific details are illustrated aimed at an in-depth understanding of the embodiments. The embodiments may be provided without one or more of the specific details, or with other methods, components, or materials, etc. In other cases, known structures, materials, or operations are not shown or described in detail so as not to obscure various aspects of the embodiment.

The references used herein are only provided for convenience and hence do not define the sphere of protection or the scope of the embodiments.

With reference to the figures, in general the device described herein, designated as a whole by the reference number 10, comprises:
- a tank 2 provided for containing molten glass;
- one or more delivery openings 4 through which the glass contained in said tank is delivered;
- at least one tubular element 6 set inside the tank and configured for collecting above the aforesaid openings molten glass at a given level; and
- at least one plunger element 8, which is set inside said tubular element and can be moved for causing outlet of molten glass in discrete amounts through the aforesaid openings.

As has already been said previously, a device of the above sort is generally used for dispensing drops of molten glass to be supplied to a machine for forming hollow glass articles. The annexed figures illustrate a non-limiting example of such a device. A cutting mechanism 30 is set underneath the device for cutting the bead of glass coming out of the openings 4 and for forming the drop of glass.

As mentioned previously, a device of the above sort is generally associated to the conditioning channel 12 of a glass-melting plant. In various embodiments, as in the one illustrated, the tank of the device is associated to one end of the channel. In particular, in various embodiments, as in the one illustrated, the tank is shaped so as to close one end of the channel; namely, it has a bottom and a wall provided for constituting a continuation, respectively, of the bottom and of the walls of said channel. It is in any case clear that it is possible to envisage alternative embodiments in which the tank has a containment structure closed on the four sides, and set in fluid communication with the channel, for example, via a purposely provided supply pipe.

In various embodiments, as in the one illustrated, at its bottom the tank has at least one opening 2a for passage of the glass, set in a position corresponding to which is a plate provided with the aforesaid delivery openings 4. The tank and the plate are made of refractory material, of any known type designed for the purposes indicated above.

With reference to the tubular element 6, in various embodiments, as in the one illustrated, it has a bottom mouth, the end edge 6' of which faces, and is at a given distance from, the bottom of the tank so as to define with said bottom a section of flow S having a substantially annular shape. In preferred embodiments the bottom mouth of the tubular element and the bottom of the tank define a section of flow with circular symmetry. In various embodiments, as in the one illustrated, the tubular element is set with its own longitudinal axis substantially orthogonal to the bottom of the tank.

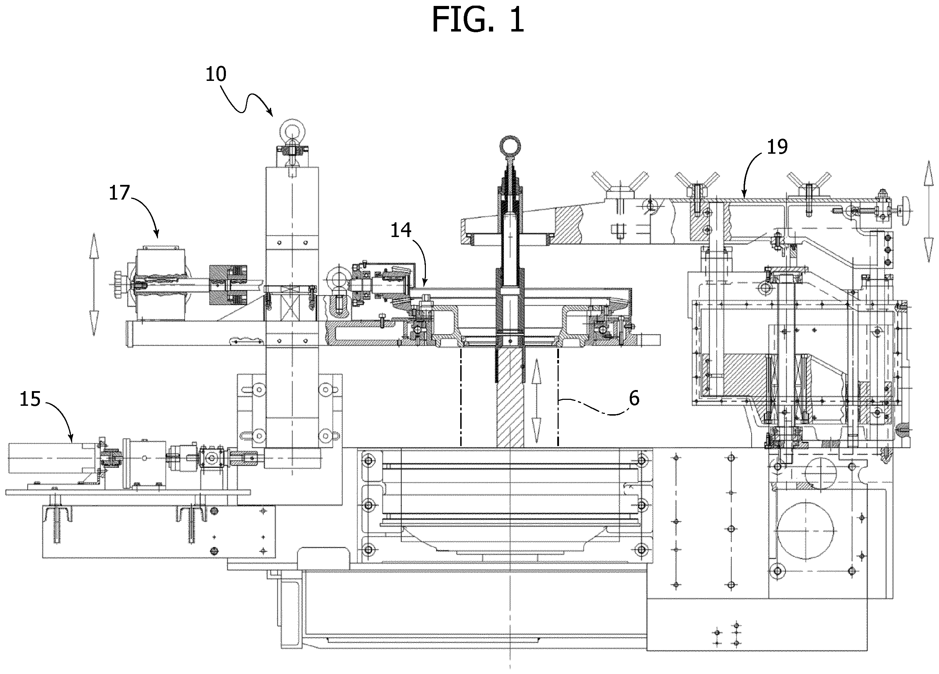

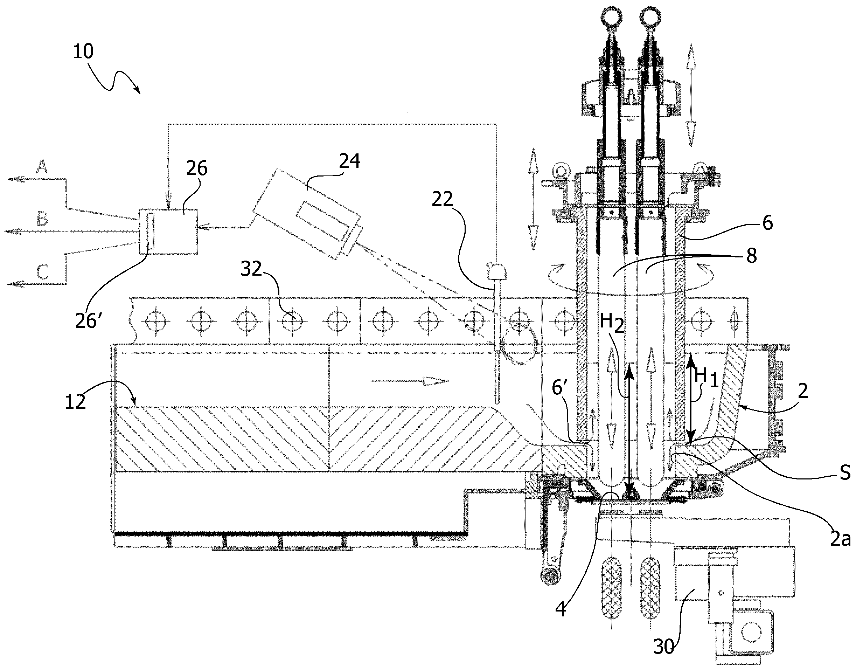

In various embodiments, as in the one illustrated, the device envisages means designed to move the tubular element for varying the distance between its bottom mouth and the bottom of the tank in order to be able to regulate the aforesaid section of flow. Figure 1 illustrates an example of embodiment of said means. In various embodiments, as in the one illustrated, said means comprise a slide 14, which is provided with a part set in cantilever fashion above the tank, and is vertically mobile via purposely provided driving means 15. In various embodiments, as in the one illustrated, the tubular element is moreover able to rotate about its own axis, in such a way that, in operation, it performs rotations at a constant speed to mix the glass in order to homogenize its temperature between the various regions of the tank. In various embodiments, as in the one illustrated, the tubular element is mounted so that it can turn on the slide and can be driven in rotation via purposely provided driving means 17 carried by the slide itself.

With reference to the plunger element 8, in various embodiments, as in the one illustrated, it is set inside the tubular element and can be moved, via purposely provided driving means 19, according to a reciprocating motion of translation along its own longitudinal axis, for causing outlet of molten glass in discrete amounts through the delivery openings. In various preferred embodiments, as in the one illustrated, associated to each of the openings 4 is a plunger element of the type indicated, which is set coaxial to the respective opening. In some cases it is, instead, possible to have a single plunger element that operates on a number of openings, in this case the plunger element having a diameter sufficient to cover the area of all the openings on which it operates.

The means for driving the tubular element and the plunger element are not described in detail herein in so far as they can be of any type known to the person skilled in the branch. For example, with reference to the movements of translation of said elements, there may be envisaged either rotary electric motors (in which case, in association with means for conversion of motion from rotational to linear, for example an internal screw/external screw transmission member) or linear electric motors.

As represented in Figure 2, during operation of the device the tank is filled with molten glass up to a level H1. Inside the tubular element the molten glass reaches, instead, a level H2 that depends upon the section of flow defined between the tubular element and the bottom of the tank and upon the rate of cutting of the drops (speed of the feeder).

In a device of the type indicated above, it may be noted that the amount of molten glass dispensed at each cycle is proportional to the level H2 and to the stroke of movement of the plunger element. It may moreover be noted that:
- the level H2 is proportional to the level H1, i.e., to the level of molten glass contained in the tank outside the tubular element; and
- the amount of molten glass dispensed is proportional to the stroke of the plunger element and to the temperature T of the glass in so far as the fluid-dynamic resistances depend upon the viscosity of the molten glass, and this is inversely proportional to the temperature T of the glass.

In view of the above, in order to maintain the amount of glass dispensed substantially constant at a given reference value, the control method described herein envisages detecting the level H1 and the temperature T and regulating the position of the tubular element and/or the stroke of movement of the plunger element as a function of the values detected.

In particular, the method described herein envisages a predictive algorithm that estimates an amount of glass that is to be dispensed Qₑₛₜᵢₘ as a function of the level H1, the value of temperature T, the position of the tubular element, and/or the stroke of movement of the plunger element. The method then envisages comparing the reference value of the amount of glass to be dispensed with the estimated value, and, in the case of deviation between the two values, regulating the position of the tubular element and/or the stroke of movement of the plunger element so as to bring the estimated value to the given reference value. The algorithm indicated above is not described in detail herein in order not to render the present description burdensome. In any case, it can be obtained experimentally by deriving empirical correlations between the amount of glass dispensed by the device and the various parameters indicated above.

In various embodiments, in the case of reduction of the level of molten glass inside the tank or channel, the control method envisages increasing the distance between the tubular element and the bottom of the tank and/or increasing the stroke of movement of the plunger element. It should be noted that to the reduction of the level H1 there would correspond, given what has been said previously, a decrease of the amount of glass dispensed in the cycle, an effect that is, instead, eliminated via the regulation indicated above.

Likewise, in various embodiments, in the case of reduction of the temperature of the molten glass, the control method envisages increasing the distance between the tubular element and the bottom of the tank and/or increasing the stroke of movement of the plunger element. It should be noted that to the reduction of the temperature of the molten glass there would correspond, given what has been said previously, a decrease in the amount of glass dispensed in the cycle, an effect that is, instead, eliminated via the regulation indicated above.

Once again in order to maintain the amount of molten glass dispensed constant, in the cases opposite to the ones indicated above, i.e., in the case of increase of the level of molten glass in the channel and/or of increase of the temperature of the molten glass, the control method envisages decreasing the distance of the tubular element from the bottom of the tank and/or reducing the stroke of movement of the plunger element.

In view of what has been said above, it is clear that the method described herein, by carrying out a control on the conditions that are able to induce variations in the amount of glass dispensed, can intervene already before being able to detect effectively such a variation, and consequently guarantees a more precise control of the amount dispensed as compared to the conventional methods described above. The method described herein can in any case envisage also direct measurement of the amount of glass effectively dispensed, as occurs in conventional methods, in order to calibrate the control strategy and/or make up for any possible tolerances of the predictive algorithm.

In various preferred embodiments, the control method described herein moreover envisages intervening on the means of the glass plant in order to bring the level of molten glass in the tank and/or the temperature thereof to the respective reference values. For said purpose, the method envisages regulating the operating modalities of the heating and/or cooling system associated to the conditioning channel of the plant. Of said system, designated by the reference number 32 in Figure 2 are a series of burners arranged in a position corresponding to the top wall of the channel 12.

In order to be able to implement the method referred to above, the control device has first sensor means designed to detect the level of molten glass inside the tank, and second sensor means designed to detect the temperature of the glass. In various embodiments, the second sensor means are constituted by a series of thermocouples 22 set in positions corresponding to the tank and/or the conditioning channel, and distributed, preferably, in a direction transverse to the direction of the flow of glass inside the tank. Preferably, said means envisage three three-level thermocouples for creating a thermal map with nine reading points. The second sensor means can, however, also be of any other type known to the person skilled in the branch so that they can be used for measuring the temperature of the molten glass.

In various embodiments, as in the one illustrated, the first sensor means are constituted by image detection and processing means. For example, the device can comprise means of the type described in the patent applications Nos. WO 2007085890 and EP 1816108, filed in the name of the present applicant. In this connection, the device described herein can comprise a video camera 24 for observing a portion of the surface of the molten glass inside the tank, and means for processing the signals at output from the video camera designed to determine the level of the molten glass through an optical measurement of the distance between a reference that substantially fixed with respect to the tank and an image of said reference reflected from the surface of the molten glass. In particular, the optical measurement envisages determining on the image acquired the number of pixels between the reference element and its image reflected on the surface of the molten glass, and comparing said number with that of a reference image, corresponding to which is a pre-set distance between the reference element and its image reflected on the surface of the molten glass. The first sensor means can, however, also be of any one other type known to the person skilled the branch so that they can be used for measuring the level of molten glass.

The device comprises a control unit 26, connected to which are the sensor means referred above and which is configured for implementing the control method described herein. The control unit can comprise an analog and/or digital circuit. In particular, the unit 26 can present processing means 26', for example a microcontroller or a PC, configured for generating, as a function of the signals detected by the sensor means and according to the control method described above, signals A, B, C, etc. for control of the means for driving the tubular element and/or the plunger element, and, in some embodiments, of the conditioning means of the channel 12 and/or of the means for regulating the level of molten glass in the furnace of the glass plant. The processing means 26' can be configured with a software code for implementing the method described herein.

Of course, without prejudice to the principle of the invention, the details of construction and the embodiments may vary, even significantly, with respect to what is illustrated herein purely by way of non-limiting example, without thereby departing from the scope of the invention, as defined by the annexed claims.

## Claims

1. A method for controlling a device for dispensing molten glass, said device being of the type comprising:
- a tank (2) provided for containing molten glass;
- one or more delivery openings (4), through which the glass contained in said tank is delivered;
- at least one tubular element (6) set inside said tank for collecting, above said one or more openings, molten glass at a given level; and
- at least one plunger element (8), which is set inside said tubular element and can be moved for causing outlet of discrete amounts of molten glass through said one or more delivery openings;
wherein said method envisages regulating the position of said tubular element as a function of a reference value of the amount of molten glass to be dispensed,
said method comprising the steps of:
- detecting a first signal indicating the level of molten glass contained in said tank outside said tubular element;
- detecting a second signal indicating the temperature of the molten glass, contained in or at inlet to said tank; and
- regulating the position of said tubular element and the stroke of movement of said plunger element as a function of said first and second signals in order to dispense a constant amount of molten glass, equal to said reference value,
said method being **characterised in that** it comprises to estimate a value of the amount of molten glass that is to be dispensed as a function of said first and second signals, of the position of the tubular element, and of the stroke of movement of the plunger element, to compare the estimated value with said reference value, and, in the case of a deviation between said estimated value and said reference value, to regulate the position of said tubular element and the stroke of movement of said plunger element so as to bring said estimated value to the reference value.

2. The method according to any one of the preceding claims, wherein
in the case of reduction of said level of glass outside said tubular element and/or of reduction of said temperature, the position of said tubular element is varied so as to increase said level of glass inside said tubular element, and/or the stroke of movement of said plunger element is increased, and, in the case of increase of said level of glass outside said tubular element and/or of increase of said temperature, the position of said tubular element is varied so as to decrease said level of glass inside said tubular element, and/or the stroke of movement of said plunger element is decreased.

3. The method according to any one of the preceding claims, wherein, in the case of variation of said level of glass outside said tubular element and/or of said temperature, said level of glass and/or said temperature is/are brought to respective reference values.

4. A device for dispensing molten glass, of the type comprising:
- a tank (2) provided for containing molten glass;
- one or more delivery openings (4), through which the glass contained in said tank is delivered;
- at least one tubular element (6) set inside said tank for collecting above said one or more openings molten glass at a given level;
- at least one plunger element (8), which set inside said tubular element and can be moved for causing outlet of discrete amounts of molten glass through said one or more openings; and
- control means configured for positioning said tubular element as a function of a reference value of the amount of molten glass to be dispensed,
said device being **characterized in that** it comprises a first sensor (24) designed to detect a first signal indicating the level of molten glass, contained in or at inlet to said tank, outside said tubular element, and a second sensor (22) designed to detect a second signal indicating the temperature of the molten glass contained in said tank, and **in that** said control means are configured for implementing a method according to any one of Claims 1 to 3.

5. A computer program product that can be loaded into the memory of at least one computer and comprises portions of software code for implementing the method according to any one of Claims 1 to 3.

## Patentansprüche

1. Verfahren für die Steuerung einer Vorrichtung zum Abgeben von Glasschmelze, wobei die Vorrichtung von der Art ist, die Folgendes umfasst:
- einen Behälter (2), der vorgesehen ist, Glasschmelze zu enthalten;
- eine oder mehrere Zuführungsöffnungen (4), durch welche das Glas, das im Behälter enthalten ist, abgegeben wird;
- mindestens ein rohrförmiges Element (6), das im Behälter angeordnet ist, um über der einen oder den mehreren Öffnungen, geschmolzenes Glas auf einem vorgegebenen Pegel zu sammeln; und
- mindestens ein Kolbenelement (8), welches im rohrförmigen Element angeordnet ist und bewegt werden kann, um das Auslassen diskreter Mengen Glasschmelze durch die eine oder die mehreren Zuführungsöffnungen zu bewirken;
wobei das Verfahren vorsieht, die Position des rohrförmigen Elements in Abhängigkeit von einem Vergleichswert der Menge der Glasschmelze, die abgegeben werden soll, anzupassen,
wobei das Verfahren folgende Schritte umfasst:
- Erfassen eines ersten Signals, das den Pegel der Glasschmelze angibt, die im Behälter außerhalb des rohrförmigen Elements enthalten ist;
- Erfassen eines zweiten Signals, das die Temperatur der Glasschmelze angibt, die im oder am Einlass zum Behälter herrscht; und
- Anpassen der Position des rohrförmigen Elements und des Bewegungshubs des Kolbenelements entsprechend dem ersten und zweiten Signal, um eine konstante Menge von Glasschmelze abzugeben, die dem Referenzwert entspricht,
wobei das Verfahren **dadurch gekennzeichnet ist, dass** es
das Schätzen eines Wertes der Menge der Glasschmelze, die in Abhängigkeit von den ersten und zweiten Signalen abgegeben werden soll, der Position des rohrförmigen Elements, und des Bewegungshubs des Kolbenelements, umfasst, um den geschätzten Wert mit dem Referenzwert zu vergleichen, und im Falle einer Abweichung zwischen dem geschätzten Wert und dem Referenzwert, die Position des rohrförmigen Elements und den Bewegungshub des Kolbenelements anzupassen, um den geschätzte Wert zum Referenzwert zu bringen.

2. Verfahren nach einem der vorhergehenden Ansprüche, wobei
im Falle einer Senkung des Glaspegels außerhalb des rohrförmigen Elements und/oder einer Senkung der Temperatur, die Position des rohrförmigen Elements verändert wird, sodass der Glaspegel innerhalb des rohrförmigen Elements ansteigt, und/oder der Bewegungshub des Kolbenelements erhöht wird, und, im Falle eines Anstiegs des Glaspegels außerhalb des rohrförmigen Elements und/oder eines Anstiegs der Temperatur, die Position des rohrförmigen Elements verändert wird, sodass der Glaspegel innerhalb des rohrförmigen Elements gesenkt wird, und/oder der Bewegungshub des Kolbenelements verringert wird.

3. Verfahren nach einem der vorhergehenden Ansprüche, wobei im Falle einer Veränderung des Glaspegels außerhalb des rohrförmigen Elements und/oder der Temperatur, der Glaspegel und/oder die Temperatur auf entsprechende Referenzwerte gebracht wird/werden.

4. Vorrichtung zum Abgeben von Glasschmelze von der Art, die Folgendes umfasst:
- einen Behälter (2), der bereitgestellt ist, Glasschmelze zu erhalten;
- eine oder mehrere Zuführungsöffnungen (4), durch welche das Glas, das im Behälter enthalten ist, abgegeben wird;
- mindestens ein rohrförmiges Element (6) das im Behälter angeordnet ist, um über der einen oder den mehreren Öffnungen Glasschmelze auf einem gegebenen Pegel zu sammeln;
- mindestens ein Kolbenelement (8), welches im rohrförmigen Element angeordnet ist und bewegt werden kann, um das Auslassen diskreter Mengen Glasschmelze durch die eine oder die mehreren Öffnungen zu bewirken; und
- Steuermittel, die konfiguriert sind, das rohrförmige Element in Abhängigkeit von einem Referenzwert der Menge der Glasschmelze, die abgegeben werden soll, zu positionieren,
wobei die Vorrichtung **dadurch gekennzeichnet ist, dass** sie einen ersten Sensor (24) umfasst, der gestaltet ist, um ein ersten Signal zu erfassen, das den Pegel der Glasschmelze angibt, die im oder am Einlass zu dem Tank befindlich ist außerhalb des rohrförmigen Elements, und einen zweiten Sensor (22), der gestaltet ist, um ein zweites Signal zu erfassen, das die Temperatur der Glasschmelze, die im Behälter enthalten ist, angibt, und dadurch, dass die Steuermittel konfiguriert sind, ein Verfahren nach einem der Ansprüche 1 bis 3 zu implementieren.

5. Computerprogrammprodukt, das in den Speicher von mindestens einem Computer geladen werden kann und Teile von Softwarecodes zum Implementieren des Verfahrens nach einem der Ansprüche 1 bis 3 umfasst.

## Revendications

1. Procédé de contrôle d'un dispositif pour distribuer du verre fondu, ledit dispositif étant du type comprenant :
- un réservoir (2) fourni pour contenir du verre fondu ;
- une ou plusieurs ouvertures de délivrance (4), à travers lesquelles le verre contenu dans ledit réservoir est délivré ;
- au moins un élément tubulaire (6) fixé à l'intérieur dudit réservoir pour recueillir, au-dessus desdites une ou plusieurs ouvertures, du verre fondu à un niveau donné ; et
- au moins un élément de piston (8), qui est fixé à l'intérieur dudit élément tubulaire et peut être déplacé pour occasionner une sortie de quantités discrètes de verre fondu à travers lesdites une ou plusieurs ouvertures de délivrance ;
dans lequel ledit procédé envisage la régulation de la position dudit élément tubulaire comme une fonction d'une valeur de référence de la quantité de verre fondu à distribuer,
ledit procédé comprenant les étapes de :
- détection d'un premier signal indiquant le niveau de verre fondu contenu dans ledit réservoir à l'extérieur dudit élément tubulaire ;
- détection d'un second signal indiquant la température du verre fondu, contenu dans ou à l'entrée dudit réservoir ; et
- régulation de la position dudit élément tubulaire et de la course dudit élément de piston comme une fonction desdits premier et second signaux afin de distribuer une quantité constante de verre fondu, égale à ladite valeur de référence,
ledit procédé étant **caractérisé en ce qu'**il consiste à estimer une valeur de la quantité de verre fondu qui doit être distribué comme une fonction desdits premier et second signaux, de la position de l'élément tubulaire, et de la course de l'élément de piston, pour comparer la valeur estimée avec ladite valeur de référence, et, dans le cas d'un écart entre ladite valeur estimée et ladite valeur de référence, à réguler la position dudit élément tubulaire et la course dudit élément de piston afin d'amener ladite valeur estimée jusqu'à la valeur de référence.

2. Procédé selon l'une quelconque des revendications précédentes, dans lequel
dans le cas d'une réduction dudit niveau de verre à l'extérieur dudit élément tubulaire et/ou d'une réduction de ladite température, la position dudit élément tubulaire varie afin d'augmenter ledit niveau de verre à l'intérieur dudit élément tubulaire, et/ou la course dudit élément de piston est augmentée, et, dans le cas d'une augmentation dudit niveau de verre à l'extérieur dudit élément tubulaire et/ou d'une augmentation de ladite température, la position dudit élément tubulaire varie afin d'abaisser ledit niveau de verre à l'intérieur dudit élément tubulaire, et/ou la course dudit élément de piston est abaissée.

3. Procédé selon l'une quelconque des revendications précédentes, dans lequel, dans le cas d'une variation dudit niveau de verre à l'extérieur dudit élément tubulaire et/ou de ladite température, ledit niveau de verre et/ou ladite température est/sont amené(s) à des valeurs de référence respectives.

4. Dispositif pour la distribution de verre fondu, du type comprenant :
- un réservoir (2) fourni pour contenir du verre fondu ;
- une ou plusieurs ouvertures de délivrance (4), à travers lesquelles le verre contenu dans ledit réservoir est délivré ;
- au moins un élément tubulaire (6) fixé à l'intérieur dudit réservoir pour recueillir au-dessus desdites une ou plusieurs ouvertures du verre fondu à un niveau donné ;
- au moins un élément de piston (8), lequel est fixé à l'intérieur dudit élément tubulaire et peut être déplacé pour occasionner une sortie de quantités discrètes de verre fondu à travers lesdites une ou plusieurs ouvertures ; et
- un moyen de contrôle configuré pour positionner ledit élément tubulaire comme une fonction d'une valeur de référence de la quantité de verre fondu à distribuer,
ledit dispositif étant **caractérisé en ce qu'**il comprend un premier détecteur (24) mis au point pour détecter un premier signal indiquant le niveau de verre fondu, contenu dans ou à une sortie dudit réservoir, à l'extérieur dudit élément tubulaire, et un second détecteur (22) mis au point pour détecter un second signal indiquant la température du verre fondu contenu dans ledit réservoir, et **en ce que** ledit moyen de contrôle est configuré pour réaliser un procédé selon l'une quelconque des revendications 1 à 3.

5. Produit de programme d'ordinateur qui peut être chargé dans la mémoire d'au moins un ordinateur et qui comprend des portions de code de logiciel pour réaliser le procédé selon l'une quelconque des revendications 1 à 3.
